# EUROPEAN PATENT APPLICATION

(11) **EP 2 966 565 A1**
(43) Date of publication of application: **13.01.2016**
(21) Application number: 13876858.5
(22) Date of filing: 25.04.2013
(51) Int. Cl.: G06F 9/44

(54) **METHOD FOR AUTOMATICALLY CONVERTING ANDROID APPLICATION TO TIZEN INSTALLABLE PACKAGE**

(30) Priority: 08.03.2013 KR 20130025110
(71) Applicant: Infraware Technology, Inc., Seoul 137-802 (KR)
(72) Inventor: BYUN, Jeong-Sub, Anyang-si Gyeonggi-do 431-050 (KR); KIM, Seung-Ho, Gunpo-si Gyeonggi-do 435-704 (KR)
(74) Representative: Fabry, Bernd
(86) International application number: PCT/KR2013/003595
(87) International publication number: WO 2014/137025

(57) **Abstract**

The present disclosure provides a technology of automatically converting these android applications to an application package that can be downloaded and installed in a smart terminal, based on Tizen platform that has been recently proposed based on the fact that there are many applications (android applications) for smart terminals that can be activated on an android platform and there are popular applications having many users in the applications. According to the present disclosure, since it is possible to automatically convert many existing android applications (particularly, popular android applications) to Tizen-installable packages, companies that develop android applications can conveniently ensure Tizen applications. Further, when the automatic conversion module according to the present disclosure is mounted in a Tizen terminal, it is possible to download an android application, automatically convert it for Tizen, and then install and execute it.

## Description

### BACKGROUND

### Field

The present disclosure relates to a method of automatically converting an existing android application to a Tizen-installable package, and a computer-readable recording medium for the method.

In detail, based on the fact that there are many applications (android applications) for smart terminals that can be activated on an android platform and there are popular applications having many users in the applications, the present disclosure relates to a technology of automatically converting these android applications to an application package that can be downloaded and installed in a smart terminal based on Tizen platform that has been recently proposed.

### Description of the Related Art

A smart terminal allows for performing work that can be processed by a computer, receiving services through mobile communication, and achieving the functions of various electronic dictionaries, using one terminal. Smart terminals are generally provided in a portable type that can be carried by users. Typical smart terminals are a smart phone, a smart pad, and a tablet computer (PC), and there have been proposed a smart set top box, a smart television (TV), and the like.

On the other hand, at present, the operating system (OS) of smart terminals are divided into iOS by Apple and Android OS published by Google, and an android platform based on the Android OS accounted for 70% of the whole world market in 2012. The android platform, which is a software stack published by OHA (Open Handset Alliance) led by Google, is a software package including all of Linux Kernel, a virtual machine (VM), a framework, an application and provides a base for developing android applications.

The android platform is applied to most smart terminals at present. The android platform has been sold only with over four hundred million smart phones per year till 2012 and is now sold in large quantities with smart pads, set top boxes, and smart televisions. With this trend, android applications are actively developed and, in these applications, there are many popular applications such as Angry bird or Kakao Talk.

In this situation, Tizen that is an open platform based on Linux has been proposed by Samsung Electronics and Intel in the latter half of 2012. When a new platform is developed, the companies providing applications based on the existing platforms have to do many works from designing of applications to programming in accordance with the new platform, so they can provide applications fitting the new platform.

That is, with the advent of a new platform called Tizen, many companies providing applications have to put in much time and effort to provide the applications to smart terminals using Tizen. Accordingly, it is strongly required to develop a technology that can suppress repeated investment for developing applications and maximally use the existing application resources in the technical field.

### [Related Art Document]

1. "Computer readable recording medium containing a program for converting SK_VM and WIPI-JAVA applications to Android applications" (Korean Patent Application No. 10-2010-0034068)
2. "Multi platform conversion apparatus and method for WIPI based applications" (Korean Patent Application No. 10-2009-0134217)
3. "Multi operating system platform in smart devices" (Korean Patent Application No. 10-2011-0076171)
4. "Driving method of specific runtime based contents in other type embedded and mobile terminal" (Korean Patent Application No. 10-2010-0024192)

### Detailed Description of the Invention

### Technical Problem

An object of the present disclosure is to provide a method of automatically converting an existing android application to a Tizen-installable package, and a computer-readable recording medium for the method.

In detail, an object of the present disclosure is to provide a technology of automatically converting these android applications to an application package that can be downloaded and installed in a smart terminal based on Tizen platform that has been recently proposed, on the basis of the fact that there are many applications (android applications) for smart terminals that can be activated on an android platform and there are popular applications having many users in the applications.

### Technical Solution

According to an aspect of the present disclosure to achieve the above-described objects, there is provided a method of automatically converting an android application to a Tizen-installable package that includes: extracting android application configuration information, an android icon file, an android class file, and an android library file from an android application package by means of an information extracting module; converting the extracted android application configuration information to a Tizen desktop file by means of a package combining module; creating a Tizen icon file, a Tizen class file, and a Tizen library file from the android icon file, the android class file, and the android library file by means of the package combining module; creating a Tizen file tree structure according to a Tizen application using the Tizen desktop file , the Tizen icon file, the Tizen class file, and the Tizen library file by means of the package combining module; and creating a Tizen-installable package by compressing data of the created Tizen file tree structure by means of a Tizen-compressing module.

The creating of a Tizen icon file, a Tizen class file, and a Tizen library file may include: recognizing specifications of a Tizen terminal where the Tizen-installable package is downloaded and installed, by means of the package combining module; and creating the Tizen class file by optimizing the android class file in accordance with android standards on the basis of the recognized specification of the Tizen terminal, by means of the package combining module.

Further, according to another aspect of the present disclosure to achieve the above-described objects, there is provided a computer-readable recording medium that includes: an information extracting module extracting android application configuration information, an android icon file, an android class file, and an android library file from an android application package; a package combining module converting the extracted android application configuration information to a Tizen desktop file, creating a Tizen icon file, a Tizen class file, and a Tizen library file from the android icon file, the android class file, and the android library file, and creating a Tizen file tree structure according to a Tizen application using the Tizen desktop file, the Tizen icon file, the Tizen class file, and the Tizen library file; and a Tizen-compressing module creating a Tizen-installable package by compressing data of the created Tizen file tree structure.

Herein, the package combining module may recognize specifications of a Tizen terminal where the Tizen-installable package is downloaded and installed and may create the Tizen class file by optimizing the android class file in accordance with android standards on the basis of the recognized specification of the Tizen terminal.

### Advantageous Effects

According to the present disclosure, since it is possible to automatically convert many existing android applications (particularly, popular android applications) to Tizen-installable packages, companies that develop android applications can conveniently ensure Tizen applications.

Further, when the automatic conversion module according to the present disclosure is mounted in a Tizen terminal, it is possible to download an android application, automatically convert it for Tizen, and then install and execute it.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a diagram illustrating a process of converting an android application package to a Tizen-installable package in accordance with an exemplary embodiment;
FIG. 2 is a block diagram illustrating internal components of a computer having a conversion tool;
FIG. 3 is a diagram illustrating a process for converting an android application package to a Tizen-installable package in accordance with an exemplary embodiment;
FIG. 4 is a diagram illustrating files extracted and created by modules in a converting system in accordance with an exemplary embodiment; and
FIG. 5 is a control flowchart when an android application package is converted to a Tizen-installable package in accordance with an exemplary embodiment.

### DETAILED DESCRIPTION OF THE PREFERRED EMBODIMENT

Hereinafter, the present disclosure will be described in detail with reference to the accompanying drawings. The drawings are provided to help understand the present disclosure and the present disclosure is not limited to the shapes and arrangement in the drawings. Equivalent or extension of additional exemplary embodiment for the drawings should be understood through the description referring to the drawings.

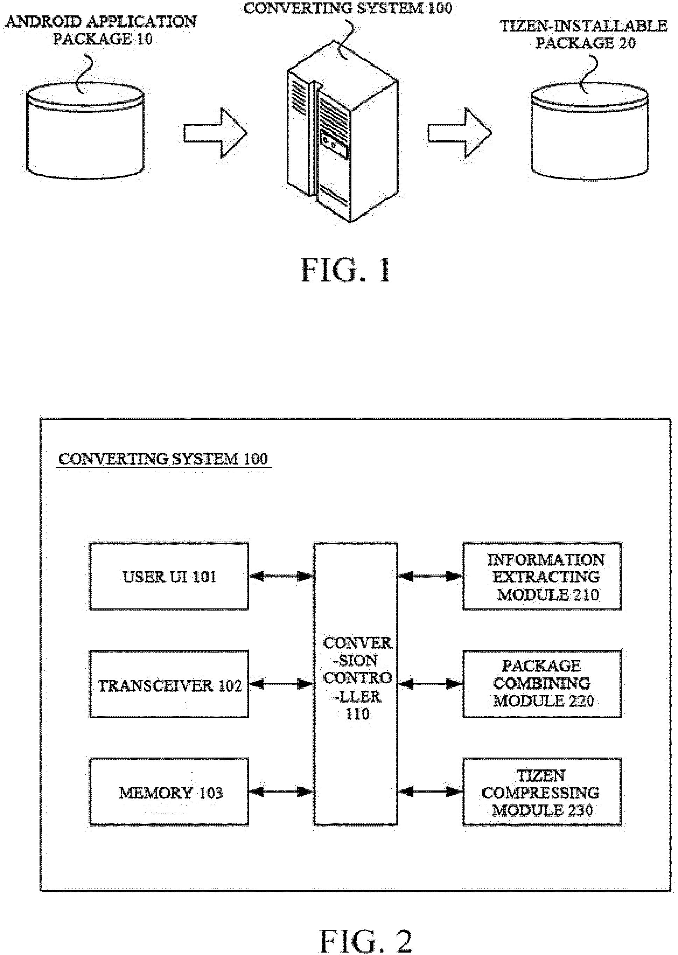

FIG. 1 is a diagram illustrating a process of converting an android application package to a Tizen-installable package in accordance with an exemplary embodiment, in which converting an android application package 10 to a Tizen-installable package 20 in a converting system 100 according to an exemplary embodiment is illustrated.

Herein, the android application package 10 is a code package for downloading, installing, uninstalling a specific application, and executing programs in a smart terminal based on an android platform. For example, a game application, a search application, an office application, and a map application for an android smart phone are each managed as the android application package 10.

The Tizen-installable package 20 is a code package for downloading, installing, and uninstalling a specific application in a smart terminal based on a Tizen platform. The Tizen-installable package 20 includes codes for executing programs, but it does not ensure executing a program based on the Tizen platform in the present disclosure and it is assumed that an android execution module should be additionally included in a Tizen terminal to execute the Tizen-installable package 20 converted in accordance with the present disclosure in a Tizen terminal. However, the right scope of the present invention is not limited thereto.

The process of converting the android application package 10 to a Tizen-installable package in the converting system 100 is described hereafter. An android application package is input or stored in the converting system 100 having a tool for converting the android application package 10 to the Tizen-installable package 20. Therefore, a user executes the converting tool, selects the android application package 10 to be converted, and then makes a request for conversion to the Tizen-installable package 20 through a menu. Then, the converting system 100 converts the android application package 10 to the Tizen-installable package 20, using the converting tool.

That is, the android application package 10 is converted to the Tizen-installable package 20 that can be downloaded, installed, and uninstalled in a Tizen terminal, by the converting tool. The configuration and operation of the converting tool will be described in detail below with reference to the drawings.

Although it is assumed in FIG. 1 that a tool for converting the android application package 10 to the Tizen-installable package 20 is included in the external converting system 100, it may be included in a smart terminal if a built-in memory and the capacity of a smart terminal based on a Tizen platform are allowable.

Further, when the android application package 10 is converted to the Tizen-installable package 20 and used in a smart terminal for Tizen, the smart terminal for Tizen may additionally includes an android execution module for executing the converted Tizen-installable package 20.

The case when the android application package 10 is converted to the Tizen-installable package 20 in the converting system 100 having a converting tool will be described hereafter for the convenience of description.

FIG. 2 is a block diagram illustrating internal components of the converting system 100 having a conversion tool according to an exemplary embodiment. Referring to FIG. 2, the converting system 100 according to an exemplary embodiment includes a user UI 101, a transceiver 102, a memory 103, a conversion controller 110, an information extracting module 210, a package combining module 220, a Tizen-compressing module 230, and may further include additional components, if necessary.

The 'module' and 'unit' stated herein, which are functional and structural combinations of hardware and software for achieving the technical spirit of the present disclosure, mean logical units of a program code and a hardware resource. It will be understood by those skilled in the art that the 'module' and 'unit' do not necessarily mean physically connected codes or one kind of hardware.

First, the conversion controller 110 controls various operations in the converting system 100 according to an exemplary embodiment, particularly, control the information extracting module 210, package combining module 220, and Tizen-compressing module 230 in order to convert the android application package 10 to the Tizen-installable package 20.

The user UI 101 recognizes an operation signal made by a user and transmits it to the conversion controller 110 and provides information about various processes made by the converting system 100 to the user through an image on a display.

The transceiver 102, which is a module for connecting with the outside through wire/wireless network such as a mobile communication network (3G, 4G, LTE, WIBRO) or wire/wireless LANs (LAN and Wi-Fi), performs data interface or data conversion.

The memory 103 may include a volatile region for temporarily keeping various data produced in operation of the conversion controller 110 and a non-volatile region for keeping program codes of databases. Further, the memory 103 may further include a region for keeping the converting tool for converting the android application package 10 to the Tizen-installable package 20 and a region for keeping the android application package 10 and the Tizen-installable package 20. A storage 13 may be a RAM, a ROM, a flash memory, an MRAM, a PRAM, an FRAM, a web disk, a cloud disk, or the like.

And, the information extracting module 210, package combining module 220, and Tizen-compressing module 230 are functional modules that actually perform the process of converting the android application package 10 to the Tizen-installable package 20, and they will be mainly described hereafter.

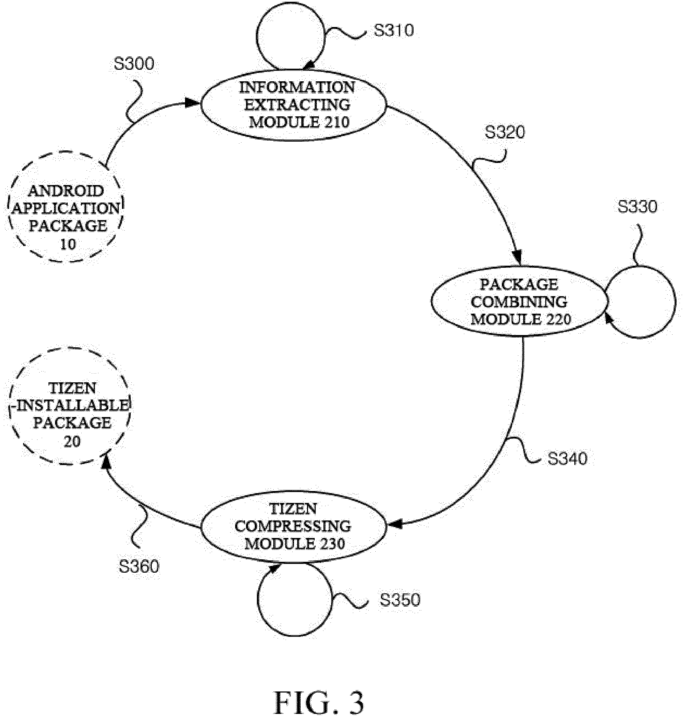

FIG. 3 is a diagram illustrating a process for converting the android application package 10 to the Tizen-installable package 20 in accordance with an exemplary embodiment. The components illustrated in FIG. 3 are the units that are used for performing each of the operations when the conversion controller 110 executes the converting tool in the memory 103.

In S300, the android application package 10 is input to the information extracting module 210. That is, this corresponds to a case when the android application package 10 is kept in the memory 103 of the converting system 100 and a user makes a request for conversion to the Tizen-installable package 20 after selecting a specific android application package 10, with the converting tool executed in the converting system 100.

Accordingly, the information extracting module 210 extracts various items of information and files for configuring a Tizen package from an APK file having the format of the android application package 10. The information extracting module 210 collects various items of file information from a file having the format of an android application package in S310.

In detail, first, the information extracting module 210 extracts a file "AndroidManifest.xml" from the android application package 10 and obtains application basic configuration information by parsing the extracted file. The parsing, which is a process that a compiler or an interpreter understands a program, means a process of analyzing the grammatical configuration or the construction of each sentence.

The information extracting module 210 extracts an icon file from resource files of the android application package 10. The icon file has a predetermined specific type, so the icon file can be extracted from resource files. Further, the information extracting module 210 extracts an android class file (classes.dex) and a library (shared object) file from the android application package 10.

The files extracted by the information extracting module 210 are provided to the package combining module 220, as in S320.

In S330, the package combining module 220 converts the files to the structure of a Tizen-package file. That is, the package combining module 220 produces application package structures that can be downloaded, installed, and uninstalled in a Tizen terminal, using the various items of information and files extracted from the android application package 10 by the information extracting module 210.

The directory and the file structure of the Tizen-installable package 20 created by the package combining module 220 are as follows.
1. app directory: A directory keeping files of android application package format.
2. bin directory: A directory keeping execution files for executing android applications.
3. dalvik-cache directory: A directory optimizing "classes.dex" extracted from the android application package 10 and keeping a resultant file. The optimizing is performed using the optimization function of the android standard implemented in a standard Android SDK (Software Development Kit).
4. data directory: A directory keeping library files to be used by loading android applications.
5. res directory: A directory keeping icon files registered in a Tizen terminal.
6. A desktop file: A file keeping a Tizen application information file, an application name, an execution file path, an icon file path, and other application options.

The package combining module 220 converts the files to Tizen format files in S330 and then provides the converted data to the Tizen-compressing module 230 in S340.

In S350, the Tizen-compressing module 230 receives the directory and the file information input from the package combining module 220 and compresses the provided data into an RPM compression format that is the Tizen-installable package format.

The Tizen application is based on Linux, as described above, so a program provided on the basis of Linux is installed and then the data is compressed into the RPM compression format that can be immediately executed. An example of a list of files compressed as described above is listed in Table 1.

**[Table 1]**

| |
|---|
| /opt/share/applications/[application name].desktop |
| /opt/app/[application name] |
| /opt/app/[application name]/app/ |
| /opt/app/[application name]/app/[application name].apk |
| /opt/app/[application name]/bin/APK_launcher |
| /opt/app/[application name]/dalvik-cache/[application name].dex |
| /opt/app/[application name]/data/ |
| /opt/app/[application name]/data/[application name]/lib |
| /opt/app/ [application name]/data/[Application name]/lib/[library-file] |
| /opt/app/[application name]/res/ |
| /opt/app/[application name]/res/icons/ |
| /opt/app/[application name]/res/icons/default/ |
| /opt/app/[application name]/res/icons/default/small/ |
| /opt/app/[application name]/res/icons/default/small/[icon file] |

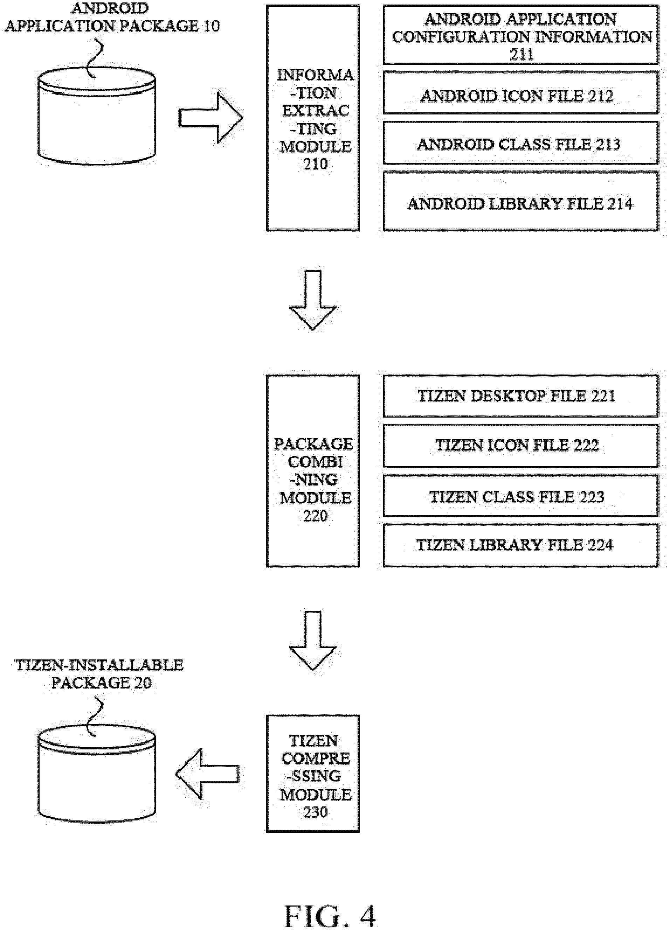

FIG. 4 illustrates files extracted and created by each of modules 210, 220, and 230 in the converting system according to an exemplary embodiment.

As described above, the information extracting module 210 extracts information for configuring the Tizen application package 20 from an APK file having the format of the android application package 10. That is, the information extracting module 210 extracts "AndroidManifest.xml" from the android application package 10 and obtains android application configuration information 211 by parsing the extracted file. Further, an android icon file 212, an android class file 213, and a library file 214 in resource files are extracted from the android application package 10.

The information extracted by the information extracting module 210 is provided to the package combining module 220 and the package combining module 220 creates various data to be used by a Tizen application by recombining the information. That is, the package combining module 220 creates a Tizen desktop file 221 using the android application configuration information 211, creates a Tizen icon file 222 using an android icon file 212, creates a Tizen class file 223 using an android class file 213, and creates a Tizen library file 224 using an android library file 214. Herein, the Tizen icon file 222, Tizen class file 223, and Tizen library file 224 may be obtained by reusing the android icon file 212, android class file 213, and android library file 214.

When the package combining module 220 finishes recombining data, the files created by the recombination, that is, the Tizen desktop file 221, Tizen icon file 222, Tizen class file 223, and Tizen library file 224 are provided to the Tizen-compressing module 230. The Tizen-compressing module 230 finishes creating files by compressing the provided files into the Tizen-installable package 20 following Tizen standards.

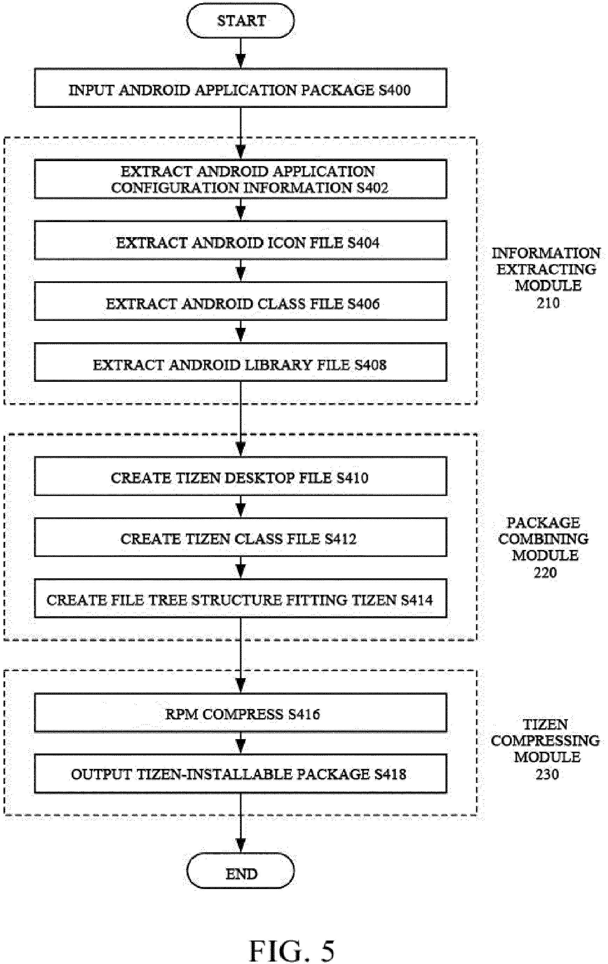

FIG. 5 is a control flowchart when the android application package 10 is converted to the Tizen-installable package 20 in accordance with an exemplary embodiment.

In the converting system 100, the converting tool is executed and a request for converting the android application package 10 that is kept in advance or provided through a network is made. Alternatively, when the android application package 10 is kept in advance or provided through a network, the converting tool for conversion of the converting system 100 is executed.

When the converting system 100 receives the android application package 10 (that is, an APK file) in S400, the information extracting module 210 extracts the android application configuration information 211 from the package in S402. Further, the information extracting module 210 extracts the android icon file 212, the android class file (classes.dex) 213, and the android library file 214 from the android application package 10 through S404 to S408.

Accordingly, the process from S400 to S408 is performed by the information extracting module 210. As described above, the files extracted by the information extracting module 210 are provided to the package combining module 220.

Then the package combining module 220 creates the Tizen desktop file 221 using the android application configuration information 211 in S410 and creates the Tizen class file 223 using the android class file 213 in S412. Herein, the android class file 213 may be reused for the Tizen class file 223. For example, it may be possible to use a resultant obtained by optimizing in advance the android class file 213 using an optimizing function implemented in an android SDK, as the Tizen class file 223.

According to the android standards, the android application package 10 undergoes an optimizing process while it is installed in an android terminal, so the optimizing process may be performed in advance in the process of conversion, as in the present disclosure. When the android application package 10 is converted for a Tizen terminal, the Tizen terminal can be recognized or specified in advance, so the optimizing process is performed in advance to fit the terminal. When the Tizen class file 223 is created by performing the optimizing process in advance, the Tizen-installable package 20 can be quickly installed later in a Tizen terminal, so it is possible to further satisfy a user.

Therefore, the package combining module 220 creates a file tree structure (Tizen file tree structure) fitting a Tizen application structure in S414, using the android application data received before and the data converted before, and creates the Tizen library file 224.

The data that finishes being converted is provided to the Tizen-compressing module 230. Then, the Tizen-compressing module 230 compresses the data into an RPM format that can be used in a Tizen terminal in S416. The RPM-compressed formats are exemplified in Table 1 and the RPM-compressed files created in the formats follow specifications required by Tizen in the basic format, so they can be downloaded, installed, and uninstalled in a Tizen terminal. Accordingly, the RPM-compressed files are called the Tizen-installable packages 20 herein.

Thereafter, the Tizen-compressing module 230 outputs the Tizen-installable package 20 created by compression in S418.

Conversion is performed in a computer having a converting tool in the above description, but a specific android application execution program should be mounted on a Tizen terminal in order to execute a converted program. However, it may be possible to change and mount a program so that the above description is automatically performed in a smart terminal.

The present disclosure may be implemented in the type of computer-readable codes in a computer-readable recording medium. The computer-readable recording medium includes all kinds of recording media storing data readable by a computer system.

The computer-readable recording medium may be ROM, RAM, CD-ROM, magnetic tape, floppy disc, optical data storage, and the like, and may be implemented in a carrier wave type (for example, transmitted by internet). The computer-readable recording mediums may be distributed to computer systems that are connected through a network and may store and execute computer-readable codes in a division type. Further, functional programs, codes, and code segments for implementing the control method may be easily inferred by programmers in the art.

Although exemplary embodiments of the present disclosure were described and illustrated in this specification and the drawings and specific terminologies were used, they are used in general meaning for easily explaining the present disclosure and helping understand the present disclosure, and do not limit the scope of the present disclosure.

It is apparent to those skilled in the art that the present disclosure may be modified in various ways on the basis of the spirit of the present disclosure other than the embodiments described herein.

## Claims

1. A method of automatically converting an android application to a Tizen-installable package, the method comprising:
extracting android application configuration information, an android icon file, an android class file, and an android library file from an android application package by means of an information extracting module;
converting the extracted android application configuration information to a Tizen desktop file by means of a package combining module;
creating a Tizen icon file, a Tizen class file, and a Tizen library file from the android icon file, the android class file, and the android library file by means of the package combining module;
creating a Tizen file tree structure according to a Tizen application using the Tizen desktop file, the Tizen icon file, the Tizen class file, and the Tizen library file by means of the package combining module; and
creating a Tizen-installable package by compressing data of the created Tizen file tree structure by means of a Tizen-compressing module.

2. The method of claim 1, wherein the creating of a Tizen icon file, a Tizen class file, and a Tizen library file includes:
recognizing specifications of a Tizen terminal where the Tizen-installable package is downloaded and installed, by means of the package combining module; and
creating the Tizen class file by optimizing the android class file in accordance with android standards on the basis of the recognized specification of the Tizen terminal, by means of the package combining module.

3. The method of claim 2, wherein the Tizen file tree structure is formed as follows:
| |
|---|
| /opt/share/applications/[application nave].desktop |
| /opt/app/[application name] |
| /opt/app/[application name]/app/ |
| /opt/app/[application name]/app/[application name].apk |
| /opt/app/[application name]/bin/APK_launcher |
| /opt/app/[application name]/dalvik-cache/[application name].dex |
| /opt/app/[application name]/data/ |
| /opt/app/[application name]data/[application name]/lib |
| /opt/app/[application name]]/data/[application name]/lib/[library-file] |
| /opt/app/[application name]/res/ |
| /opt/app/[application name]/res/icons/ |
| /opt/app/[application name]/res/icons/default/ |
| /opt/app/[application name]/res/icons/default/small/ |
| /opt/app/[application name]/res/icons/default/small/[icon file] |

4. A computer-readable recording medium recorded with a program for converting an android application to a Tizen-installable package, the computer-readable recording medium comprising:
an information extracting module extracting android application configuration information, an android icon file, an android class file, and an android library file from an android application package;
a package combining module converting the extracted android application configuration information to a Tizen desktop file, creating a Tizen icon file, a Tizen class file, and a Tizen library file from the android icon file, the android class file, and the android library file, and creating a Tizen file tree structure according to a Tizen application using the Tizen desktop file, the Tizen icon file, the Tizen class file, and the Tizen library file; and
a Tizen-compressing module creating a Tizen-installable package by compressing data of the created Tizen file tree structure.

5. The computer-readable recording medium of claim 4, wherein the package combining module recognizes specifications of a Tizen terminal where the Tizen-installable package is downloaded and installed and creates the Tizen class file by optimizing the android class file in accordance with android standards on the basis of the recognized specification of the Tizen terminal.

6. A computer-readable recording medium recorded with a program for performing the method of automatically converting an android application to a Tizen-installable package of any one of claims 1 to 3.
